# EUROPEAN PATENT APPLICATION

(11) **EP 1 172 805 A1**
(43) Date of publication of application: **16.01.2002**
(21) Application number: 01910268.0
(22) Date of filing: 09.02.2001
(51) Int. Cl.: G11B 5/84

(54) **METHOD FOR PRODUCING A MAGNETIC INFORMATION CARRIER**

(30) Priority: 11.02.2000 RU 2000103194
(71) Applicant: "Laboratoriya Ionnykh Nanotekhnology" (OOO "Labintekh"), Moscow, 123182 (RU)
(72) Inventor: GUROVICH, Boris Aronovich, Moscow, 125565 (RU); DOLGY, Dmitry Iosifovich, Moscow, 123181 (RU); MEILIKHOV, Evgeny Zalmanovich, Moscow, 123098 (RU); VELIKHOV, Evgeny Pavlovich, Moscow, 123182 (RU); BETELIN, Vladimir Borisovich, Moscow, 117270 (RU); KULESHOVA, EVGENIYA ANATOLIEVNA, Moscow, 113208 (RU); OLSHANSKY, Evgeny Dmitrievich, Moscow, 123242 (RU); ARONZON, Boris Aronovich, Moscow, 109316 (RU); KALININ, Alexandr Viktorovich, Moscow, 117330 (RU)
(74) Representative: W.P. Thompson & Co.
(86) International application number: RU0100055
(87) International publication number: WO0159770

(57) **Abstract**

The method of manufacturing magnetic medium for data storage comprises establishing on a substrate (1) a regular structure comprising single-domain magnetic segments (2) for placing data therein, which segments are isolated from one another by a nonmagnetic or weakly magnetic material. The single-domain magnetic segments (2) are formed as spatially isolated groups (3) having equal number of such segments (2), and the area of the magnetic medium occupied by each group (3) is selected depending on the resolution of a device that records data on and/or reads them from the magnetic medium.

## Description

### Technical Field

The present invention relates, in general, to electronic engineering and, more specifically, concerns the method of manufacturing the magnetic medium for data storage.

### Background Art

Known in the present state of art is the method of producing a magnetic medium for data storage, said medium appearing as a nonmagnetic matrix incorporating particles of a magnetic material distributed thereover and kept out of contact with each other (cf. US Patent #5,652,054, NPC 428-328, 1997). According to said patent, a desired magnetic medium for data storage is prepared by simultaneous magnetron sputtering of the material of said nonmagnetic matrix and said magnetic material and their vacuum co-deposition on a substrate made of glass, ceramics or metal. Sputtering the material of the nonmagnetic matrix and of the magnetic material in an inert gas, or their chemical deposition from gaseous phase can be used as well. However, the method in question fails to provide an accurate and regular distribution of magnetic particles in the matrix and prevents attaining identical geometric dimensions and shape of the magnetic particles and their equal spacing from one another.

Known from the specification of Japanese Application #3-254,421, IPC G 11 B 5/84 is a method of manufacturing desired magnetic medium for data storage. According to said method, a 1µm-thick layer of a soft magnetic material having high magnetic permeability is either electroplated or spray-deposited on a nonmagnetic substrate. Then a mask is formed on the thus-prepared layer using photolithography technique, whereupon said layer of soft magnetic material is exposed to the effect of a flux of hydrogen or helium ions. Thus, hydrogen or helium ions are free to implant into those portions of said layer which are not protected by the mask during the exposing process so as to transform magnetic properties of said layer at the place of their implantation, i.e., nonmagnetic segments in the layer are formed as a result.

Once the photolithographic mask has been removed, the layer deposited on the substrate comprises magnetic portions adapted for data storage and nonmagnetic segments alternating with said magnetic portions in accordance with the pattern of the photolithographic mask.

However, the method under discussion fails to be capable of producing a medium for data storage that ensures high-density data recording nor does it provide for a very pronounced shape anisotropy of the magnetic segments of the magnetic carrier that may lead to an externally induced spontaneous change of the magnetization vector and, hence, to the loss of recorded data.

Selected as the prototype of the present invention is a method of manufacturing desired magnetic medium for data storage, appearing as a matrix made from a nonmagnetic material and incorporating magnetic segments of identical size and shape spaced equally apart from one another (cf. US Patent #5,820,769, NPC 216-22, 1998). Production process protected by said patent makes use of an electron-beam lithography technique comprising the steps of: forming, on a nonmagnetic substrate, a protective mask made of a polymethylmethacrylate (PMMA ) resist; focusing an electron beam on said resist in a dia. 4 nm spot; etching said nonmagnetic substrate to form holes therein unprotected by said resist; applying, either by spray-deposition or photo-deposition, a magnetic material to said nonmagnetic substrate; removing said resist from said nonmagnetic substrate; and filling the space between the thus-formed segments of the magnetic material with a nonmagnetic material, e.g., insulator.

The aforementioned method allows of producing a magnetic medium for data storage appearing as a matrix made from a nonmagnetic material and having a regular structure established therein and comprising identical magnetic particles featuring a very pronounced shape anisotropy. Such a magnetic medium is characterized by high reliability of recorded data storage, this being due to the fact that provision of nonmagnetic interspaces precludes any interference between magnetic particles, and on account of single-domain structure of the magnetic particles and their shape anisotropy each of them may be only in two magnetic states with antiparallel magnetic moments.

However, each of the magnetic particles in a magnetic medium made by the method in question has such a minutest size that an information bit contained therein cannot be used due to a lower resolution of modern write/read devices.

As a result, when recorded in quantized states corresponding to the single information bit, an unequal number of single-domain magnetic particles are brought in, whereby difficulties are encountered during subsequent reading of information therefrom.

### Summary of the Invention

The present invention has for its primary and essential object to provide a method of manufacturing such a magnetic medium for data storage that is adapted to devices having any spatial resolution and ensures highly reliable data storage.

Said object is accomplished due to the provision of a method of producing magnetic medium for data storage, said method comprising the following steps: forming a regular structure on the substrate comprising single-domain magnetic segments for storage of information therein, said segments being isolated from one another with a nonmagnetic or weakly magnetic material, wherein, according to the invention, single-domain magnetic segments are formed as spatially isolated groups having equal number of single-domain magnetic segments, while the area of the magnetic medium occupied by each group is selected depending on the resoution of a device that write data on and/or reads them from the magnetic medium.

It is due to the present invention that the magnetic medium made according to the proposed method is adaptable to any type of write/read device and provides for highly reliable data storage.

In accordance with the present invention, it is expedient that the number of magnetic segments, the area occupied by said segments, and the intergroup spacing be so selected that each group would store one information bit.

Further objects and advantages of the present invention will become apparent from a detailed description of a method of producing magnetic medium for data storage, of some exemplary embodiments of said method, and of the accompanying drawings, wherein:

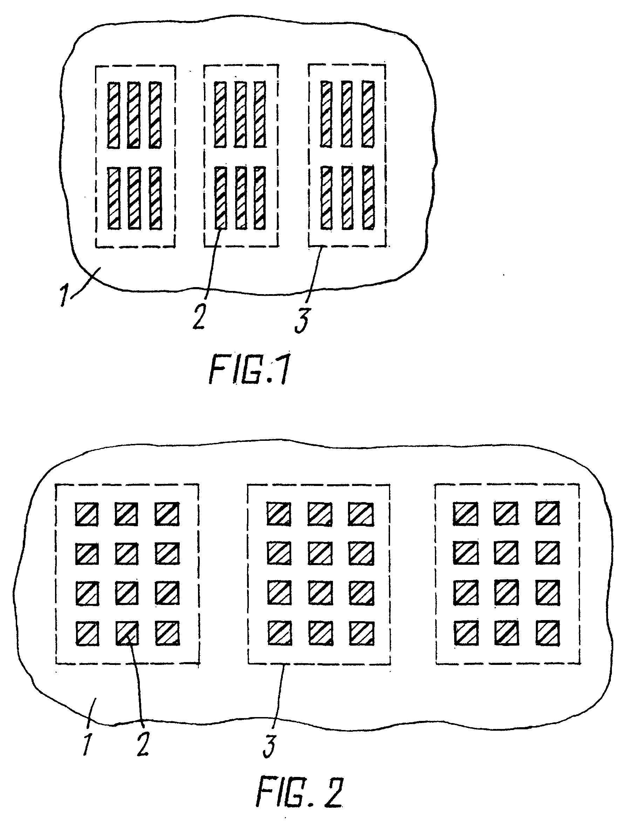

FIG. 1 is a fragmentary plan view of a magnetic medium for longitudinal data recording, said medium being made according to the method proposed herein; and
FIG.2 is a fragmentary plan view of a magnetic medium for transverse data recording, said medium being made according to the method proposed herein.

The method of manufacturing magnetic medium for data storage according to the present invention comprises establishing a regular structure on a nonmagnetic substrate 1, said structure comprising single-domain magnetic segments 2 adapted for data storage thereon and isolated from one another with a nonmagnetic or weakly magnetic material. According to the invention, single-domain magnetic segments 2 are organized as spatially isolated groups 3 having equal number of single-domain magnetic segments 2, and the area of the magnetic medium occupied by each group 3 is selected depending on the resolution of a device that writes data on and/or reads data from the magnetic medium.

According to the present invention, the single-domain magnetic segments 2 can be formed on the substrate 1 made of a nonmagnetic material, such as aluminium, copper, glass, or ceramics by applying to the substrate 1 a mask or stencil, the size, amount and arrangement of perforations on said mask or stencil define the size and amount of the magnetic segments 2, as well as the area of the groups 3 of the magnetic segments 2 and their arrangement on the substrate 1. The mask can be made, e.g., in keeping with a standard lithography procedure, such as the electron-beam lithography technique. Then said perforations of the mask are filled with a magnetic material, e.g. iron or cobalt, by evaporation- or chemical deposition, said magnetic material being fixed in position on the substrate 1 as bulky magnetic segments 2. Excess magnetic material are disposed of either mechanically or chemically, whereupon said mask is withdrawn from the substrate 1. As a result, established on the surface of the nonmagnetic substrate 1 are separate magnetic segments 2 arranged in a certain order and having the size that provides for their single-domain structure.

The space between the separate magnetic segments 2 is filled with a nonmagnetic material so as to obtain a matrix from said nonmagnetic material, wherein the single-domain magnetic segments 2 are distributed in accordance with a predetermined pattern.

In addition, the single-domain magnetic segments 2 can be formed on the substrate 1 made from a nonmagnetic material, such as aluminium, copper, glass or ceramics by, e.g., deposition on said substrate 1 a material having low or zero initial magnetization and capable of varying its magnetic properties when exposed to radiation. Used as such a material may be various nonmagnetic compounds of ferromagnetic metals, such as Fe₂O₃, or CoO, or oxides of Permendure or Permalloy, or else some other compounds and materials having the aforesaid characteristics.

Then a mask is established on the deposited layer, employing commonly known techniques, e.g., a standard lithography procedure, such as the electron-beam lithography technique. The size, amount and arrangement of perforations on said mask define the size and amount of the magnetic segments 2 being formed, as well as location of the groups 3 of the magnetic segments 2 on the substrate 1. Use can also be made of a stencil positioned in front of the deposited layer and provided with perforations of the aforesaid size, amount, and arrangement.

Next, said deposited layer is subjected to selective irradiation, in accordance with the pattern of a mask or stencil, with a flux of charged particles, e.g., electrons, ions, or others selected from the heretofore-known ones.

A beam of charged particles, while passing through the mask or stencil, becomes spatially modulated in intensity and translates information about the pattern of the mask or stencil to the layer of a material capable of varying its magnetic characteristics under the effect of irradiation. Type of charged particles, their dose and energy are selected by estimation on the basis of commonly known rules, or experimentally depending on the material of the layer being irradiated.

Said irradiation results in the transformation of magnetic characteristics of the material of said layer, that is, under the effect of charged particles the nonmagnetic material on the layer portions unprotected by the mask or stencil transforms into magnetic one, or the material having a low initial magnetization increases its magnetization many times, and a structure is formed on the substrate which comprises groups having equal amount of single-domain magnetic segments alternating respectively with the segments made of a nonmagnetic material or of a material with low initial magnetization.

Hence when forming said groups 3 of the magnetic segments 2 by said methods, the area occupied by the groups 3 on the magnetic medium, the amount of the magnetic segments 2 in each group 3, and the spacing between the groups 3 are so selected that each group 3 would store one information bit, i.e., that the magnetization vectors of the magnetic segments 2 in the groups 3 be of the same direction.

Number of the magnetic segments 2 per group 3, spacing between the single-domain magnetic segments 2, the area of the magnetic medium occupied by the group 3, and spacing between the groups 3 are selected depending on the resolution of the write/read device. Modern hard disks, e.g., those of the Western Digital Caviar BB, Seagate Barracuda ATA 11, Fujitsu MPF 3xxx AH, Quantum Fireball Plus AS series have a data storage density corresponding to a bit area below 10⁻⁸ cm².

Hence when a group comprises 50 magnetic segments each having an area of 10⁻¹⁰ cm², so the area of said group equals 10⁻⁸ cm², that is, the read/write devices of said hard disks may be used for data recording on and reading from such a group of magnetic segments.

### Best Method of Carrying Out the Invention

The proposed method of producing magnetic medium for data storage comprises forming on the nonmagnetic substrate 1 a regular structure comprising the single-domain magnetic segments 2 adapted for carrying data thereon and isolated from one another with a nonmagnetic or weakly magnetic material, wherein, according to the invention, the single-domain magnetic segments 2 are formed as the spatially isolated groups 3 having an equal amount of the single-domain magnetic segments 2, the area of the magnetic medium occupied by each group 3 is selected depending on resolution of the device for recording data on the magnetic medium and/or reading data therefrom.

Said formation of the single-domain magnetic segments 2 on the nonmagnetic substrate 1 is carried out by applying to said substrate 1 made from, e.g., aluminium, silicon, ceramics, or glass, a material capable of changing its magnetic characteristics under the effect of irradiation and having low or zero initial magnetization. Used as such a material may be a variety of nonmagnetic compounds of ferromagnetic metals, such as Fe₂O₃, or CoO, or oxides of Permendure or Permalloy, or else some other compounds and materials having the aforesaid characteristics.

Then a mask is established on the deposited layer, using commonly known techniques, e.g., a standard lithography procedure, such as the electron-beam lithography technique. The size, amount and arrangement of perforations on said mask define the size and amount of the magnetic segments 2 being formed, as well as location of the groups 3 of the magnetic segments 2 on the substrate 1. Use can also be made of a stencil positioned in front of the deposited layer and provided with perforations of the aforesaid size, amount, and arrangement.

Next, said deposited layer is subjected to selective irradiation, in accordance with the pattern of a mask or stencil, with a flux of charged particles, e.g., electrons, ions, or others selected from the heretofore-known ones.

The aforesaid irradiation can be effected according to a procedure described in RF Patent #2,129,320. Said procedure consists in that a beam of charged particles is formed, said particles having certain energy and certain particle energy dispersion within 0.1 to 5.0 eV. Then the thus-formed beam of charged particles is focused with a lense system and directed onto the mask or stencil. Such a lense system (magnetic or electrostatic ones) provides for primary focusing of the thus-formed beam of charged particles in such a manner that beam divergence is as low as within 5.10⁻² to 10⁻⁴ rad. The thus-established beam of charged particles passes through the mask or stencil, becomes spatially modulated in intensity, and translates information about the pattern of the mask or stencil to the layer of a material capable of changing its magnetic characteristics under the effect of irradiation. Type of charged particles, their dose and energy are selected by estimation on the basis of commonly known rules, or experimentally depending on the material of the layer being irradiated capable of varying its magnetic properties under the effect of irradiation and having low or zero initial magnetization.

It is due to complying with the aforesaid conditions that magnetic characteristics of the material of said layer are transformed, i.e., under the effect of charged particles the nonmagnetic material on the layer portions unprotected by the mask or stencil transforms into magnetic one, or the material having a low initial magnetization increases its magnetization many times, and a structure is formed on the substrate 1 which comprises the groups 3 having equal amounts of single-domain magnetic segments 2 alternating with the segments made of a nonmagnetic material or of a material with low initial magnetization.

The structure thus formed on the substrate 1 is characterized by the area of the magnetic medium occupied by each group of the single-domain magnetic segments 2, the number of the magnetic segments 2 per group 3, and spacing between said groups 3, all of said characteristics being selected depending on the resolution of a device that records data on and/or reads them from the magnetic medium, said structure ensuring that the magnetization vector of each magnetic segment 2 in each group 3 be directed in the same direction.

The fact that the magnetic segments 2 are arranged as spatially isolated groups 3 and the area occupied by said segments on the magnetic medium is appropriately selected renders said medium adaptable to any of the now existing types of the read/write devices, as well as to any such equipment that will be developed in the future, because the area occupied by each isolated group 3 carrying one information bit is readily variable within a broad range from as large as is desired down to a single element comprising a single single-domain magnetic segment 2.

The fact that an equal number of the single-domain magnetic segments 2 are arranged in each group 3 makes it possible to provide uniformity of characteristics in each of the groups 3 carrying an information bit, thus adding to the quality of recording and increasing the signal-to-noise ratio.

To promote understanding of the present invention, given below are some specific exemplary embodiments thereof appearing in the tabular form.

| Example No. | 1 | 2 | 3 | 4 | 5 |
|---|---|---|---|---|---|
| Thickness of layer of material with low or zero initial magnetization | 0.5 µm | 0.2 µm | 30 nm | 20 nm | 0.25µm |
| Area of one group of single-domain magnetic segments | 1.08 µm² | 0.3072µm² | 10,800 nm² | 4,800 nm² | 0.25µm² |

| Example No. | 1 | 2 | 3 | 4 | 5 |
|---|---|---|---|---|---|
| Size of group Length | 1µm | 0.5µm | 150 nm | 100 nm | 0.5µm |
| Width | 1µm | 0.5µm | 30 nm | 20 nm | 0.5µm |

| Spacing between groups | | | | | |
|---|---|---|---|---|---|
| Horizontally | 2µm | 1µm | 0.5µm | 20 nm | 0.5µm |
| Vertically | 2µm | 1µm | 0.5µm | 20 nm | 0.5µm |
| Number of single-domain segments per group | 36 | 16 | 1 | 1 | 25 |

| Spacing between single-domain segments | | | | | |
|---|---|---|---|---|---|
| Horizontally | 50 nm | 40 nm | 30 nm | 20 nm | 50 nm |
| Vertically | 50 nm | 40 nm | 30 nm | 20 nm | 50 nm |

| Size of single-domain segment | | | | | |
|---|---|---|---|---|---|
| Length | 250 nm | 200 nm | 150 nm | 100 nm | 50 nm |
| Width | 50 nm | 40 nm | 30 nm | 20 nm | 50 nm |

### Industrial Applicability

The herein-proposed invention can find application in preparing storage devices, hybrid microcircuits made use of in, e.g., computers, sound recording apparatus, or video tape recorders.

## Claims

1. A method of manufacturing magnetic medium for data storage, said method comprising the following steps: establishing on a substrate (1) a regular structure comprising single-domain magnetic segments (2) for placing information therein, said segments being isolated from one another with a nonmagnetic or weakly magnetic material, **CHARACTERIZED in that** the single-domain magnetic segments (2) are formed as spatially isolated groups (3) having equal number of single-domain magnetic segments (2), while the area of the magnetic medium occupied by each group (3) is selected depending on the resolution of a device that records data on and/or reads them from the magnetic medium.

2. The method of claim 1, **CHARACTERIZED in that** the number of the magnetic segments (2), the area occupied by said segments, and the spacing between the groups (3) are so selected that each group stores one information bit.
